(19) Europäisches Patentamt
European Patent Office
Office européen des brevets

(11) Veröffentlichungsnummer : **0 077 967**
**B1**

(12) # EUROPÄISCHE PATENTSCHRIFT

(45) Veröffentlichungstag der Patentschrift : **16.04.86**

(21) Anmeldenummer : **82109393.7**

(22) Anmeldetag : **11.10.82**

(51) Int. Cl.[4] : **C 08 L 63/00**, C 08 K 9/04, C 08 K 9/02, H 01 B 3/40, C 09 C 1/02, C 09 C 3/06, C 09 C 3/08

(54) **Reaktionsharzmassen und daraus hergestellte Formstoffe.**

(30) Priorität : **22.10.81 DE 3141955**

(43) Veröffentlichungstag der Anmeldung : **04.05.83 Patentblatt 83/18**

(45) Bekanntmachung des Hinweises auf die Patenterteilung : **16.04.86 Patentblatt 86/16**

(84) Benannte Vertragsstaaten : **AT BE CH DE FR GB IT LI NL SE**

(56) Entgegenhaltungen :
**DE-A- 2 810 035**
**DE-B- 1 189 277**
**GB-A- 2 054 541**

(73) Patentinhaber : **Siemens Aktiengesellschaft**
**Berlin und München Wittelsbacherplatz 2**
**D-8000 München 2 (DE)**

(72) Erfinder : **Grimmer, Rudolf, Dr. Dipl.-Chem.**
**Reinschartenweg 17 a**
**D-8520 Erlangen (DE)**

**EP 0 077 967 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft Reaktionsharzmassen auf der Basis von anhydridgehärteten Epoxidharzen und carbonathaltigen Füllstoffen und daraus hergestellte Formstoffe.

Gießharzbauteile werden aus verschiedenen Gründen nicht mit Quarzmehl, sondern mit gemahlenem Calcium-Magnesium-Carbonat oder gemahlenem Calciumcarbonat gefüllt. Ein Grund ist die Beständigkeit von mit Calcium-Magnesium-Carbonaten gefüllten Formstoffen gegenüber $SF_6$-Zersetzungsprodukten. Ein weiterer Vorteil des Calcium-Magnesiumcarbonats und auch des Calciumcarbonats gegenüber Quarzmehl ist ihre geringere abrasive Wirkung, die sich an den Gießharzaufbereitungs- und Verarbeitungsanlagen sowie bei der Bearbeitung der Bauteile nachteilig bemerkbar macht. Einen gravierenden Nachteil zeigen carbonatgefüllte Formstoffe gegenüber solchen, die mit Quarzmehl gefüllt sind. Die mechanischen Formstoffeigenschaften (Biegefestigkeit, Schlagzähigkeit) liegen um ca. 50 % niedriger.

Aufgabe der vorliegenden Erfindung ist es, Reaktionsharzmassen zur Verfügung zu stellen, deren ausgehärtete Produkte auch hinsichtlich der mechanischen Eigenschaften den mit Quarzmehl gefüllten gleichwertig sind. Einfaches Zumischen von Benetzungsmittel (= B. DE-A-2 810 035) und/oder Haftvermittlern, wie Silanen und Titanaten, brachte nicht den gewünschten Erfolg.

Diese Aufgabe wird erfindungsgemäß gelöst durch ein Carbonat des Calciums und/oder Magnesiums behandelt mit einer mehrbasischen anorganischen Säure oder einer mehrbasischen organischen Säure, die mit der Oberfläche des Carbonats reagieren und abbinden. Die behandelten Füllstoffe lassen sich homogen mit Epoxidharzen und Härtern in der Wärme bei 60-150 °C mischen, wobei die Mischungen sich durch Härtung unter Zugabe der üblichen Beschleuniger zu Formstoffen verarbeiten lassen.

Der Einsatz von mehrbasischen Säuren brachte Festigkeitssteigerungen bis zu 30 %. Gleich gute Ergebnisse konnten mit organischen Hydroxysäuren und Aminosäuren erreicht werden. Mit Hydroxy-di- und -tricarbonsäuren konnte eine Anhebung des mechanischen Eigenschaftsniveaus um 35 % erreicht werden.

Besonders geeignete Füllstoffe sind gemahlener Dolomit oder gemahlene Calcite.

Geeignete mehrbasische anorganische Säuren sind z. B. Phosphor-, Schwefel- und Borsäure. Als mehrbasische organische Säure haben sich Malein-, Bernstein-, Fumar-, Cyclohexandicarbon- und Adipinsäure erwiesen.

Geeignete organische Hydroxysäuren sind z. B. Hydroxybenzoesäuren, 2-Hydroxyäthansulfonsäure, Wein-, Tartron- und Glykolsäure, sowie Mannit und vor allem Äpfel- und Zitronensäure.

Geeignete mehrbasische Aminosäuren sind z. B. Asparagin-, Glutamin-, Sulfanil- und Aminobenzoesäuren und Taurin.

Zahlreiche Anhydridhärter für Epoxidharz sind in der Literatur beschrieben, beispielsweise « Epoxydverbindungen und Epoxydharze » Dr. A.M. Paquin, 1958, S. 473 bis 530.

Geeignete Anhydridhärter, die vorzugsweise Verwendung finden, sind Phthalsäureanhydrid, Tetrahydrophthalsäureanhydrid und Hexahydrophthalsäureanhydrid.

Als Epoxidharze sind Polyepoxidverbindungen geeignet, die mehr als eine 1,2-Epoxidgruppe im Molekül enthalten und welche mit den genannten Härtern oder Härtergemischen zu Formkörpern umgesetzt werden können. Solche geeignete Epoxidharze entsprechen der allgemeinen Formel

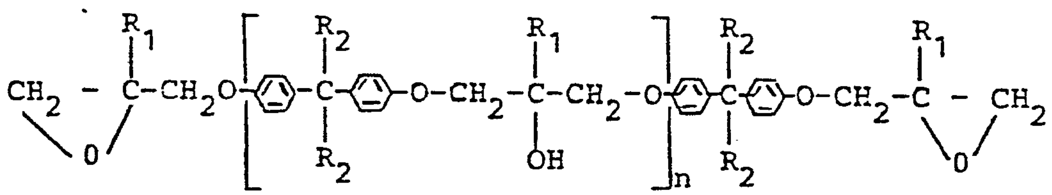

wobei der Rest $R_1$ die Bedeutung H, $R_2$ die Bedeutung $CH_3$ und H hat und n einen Wert von 0 bis 20 besitzt. Sie haben in 100 %igem Zustand bei 25 °C eine Viskosität von 10 000 bis 15 000 mPas und ein Epoxidäquivalent (EV) von 170 bis 500. Die Herstellung eines solchen Harzes kann nach bekannten Verfahren aus Bisphenol A und Epichlorhydrin erfolgen.

Ferner sind Epoxidharze geeignet auf Hydantoin-, Novolak-, Diglycidylester- und cycloaliphatischer Basis.

Für die Herstellung der Reaktionsharzmassen gemäß der Erfindung hat es sich als besonders günstig erwiesen, daß man den carbonathaltigen Füllstoff über ein Lösungsmittel mit einer der genannten Verbindungen, insbesondere mit Zitronen- oder Äpfelsäure beschichtet. Die Beschichtung kann auch über einen Sublimationsvorgang erfolgen.

Die erfindungsgemäßen Reaktionsharzmassen können als Tauchharze, Gießharze, Einbettungs- und Isolationsmasse, insbesondere für die Elektrotechnik dienen. Sie finden mit besonderem Vorteil Verwendung für die Herstellung von Bauteilen der $SF_6$-Technik.

Die nachfolgenden Beispiele dienen der Erläuterung der Erfindung.

Beispiel 1

1 000 g eines Bisphenol-A-Epoxidharzes (EP-Zahl : 0,24) werden auf 140 °C erwärmt. Dazu werden unter Rühren 2 350 g eines mit einem Beschichtungsmittel gemäß Tabelle 1 behandelten Dolomitmehles gegeben. Diese Mischung wird 2 Stunden bei 140 °C auf 1 kPa entgast. Anschließend werden 380 g eines auf 140 °C aufgeheizten Dicarbonsäureanhydrid-Gemisches (Phthalsäure- und Tetrahydrophthalsäureanhydrid im Verhältnis 1 : 2) als Härtungsmittel zugegeben. Diese Masse wird bei 140 °C 5 min auf 1 mbar entgast und dann in die auf 150 °C vorgeheizten Formen gegossen. Die Härtung erfolgt bei 150 °C im Verlauf von 16 Stunden.

Die so hergestellten Normstäbe (120 mm × 15 mm × 10 mm) werden dann nach einwöchiger Lagerung bei Raumtemperatur auf die Formbeständigkeit nach Martens, Biegefestigkeit und Schlagzähigkeit geprüft.

In der Tabelle 1 sind die Prüfwerte an Normstäben der Formstoffe zusammengefaßt, die mit verschiedenen Verbindungen behandeltes Dolomitmehl enthalten.

Tabelle 1

| Beschichtungsmittel | Formbeständigkeit nach Martens °C | Biegefestigkeit $N/mm^2$ | Schlagzähigkeit $kJ/m^2$ |
|---|---|---|---|
| unbehandelt | 117 | 69 | 5,5 |
| Borsäure | 115 | 82 | 6,8 |
| Phosphorsäure | 116 | 79 | 7,8 |
| Bernsteinsäure | 118 | 81 | 8,2 |
| Fumarsäure | 117 | 87 | 7,7 |
| 2-Hydroxyäthansulfonsäure | 118 | 74 | 6,1 |
| Apfelsäure | 115 | 83 | 7,5 |
| Zitronensäure | 115 | 87 | 8,4 |
| Asparaginsäure | 116 | 76 | 6,5 |
| Sulfanilsäure | 110 | 74 | 6,8 |

Die Beschichtung des Füllstoffes wird wie folgt durchgeführt.

Beschichtung des Füllstoffes :

In 800 g Äthylalkohol oder destilliertem Wasser (je nach Lösungsvermögen) werden 10 g des Beschichtungsmittels gelöst. Mit dieser Lösung werden 2 000 g Dolomit- oder Calcitmehl durchtränkt. Nach 3 Stunden wird der Füllstoff bei 100 °C im Umluftofen getrocknet und anschließend gesiebt.

Als Beschichtungsmittel wurden Borsäure, Phosphorsäure, Bernsteinsäure, Fumarsäure, 2-Hydroxyäthansulfonsäure, Äpfelsäure, Zitronensäure, Asparaginsäure und Sulfanilsäure verwendet.

Bei den Verbindungen, die bei höheren Temperaturen unzersetzt flüchtig sind, kann die Beschichtung des Dolomit- oder Calcitmehles auch durch Sublimation erfolgen. Es werden 2 000 g des Mineralmehles, in das 10 g Bernsteinsäure oder Fumarsäure eingemischt sind, bei 150 °C 3 Stunden auf 1 mbar gehalten.

Beispiel 2

Zu 1 000 g Hexahydrophthalsäurediglycididylester werden 900 g aufgeschmolzenes Hexahydrophthalsäureanhydrid gegeben. Nach dem Aufheizen auf 80 °C werden 3 800 g eines mit Zitronensäure behandelten Calcitmehles untergerührt. Dieser Mischung werden 10 g eines tertiären Amines als Beschleuniger zugemischt. Die Masse wird 20 min bei 80 °C auf 1 kPa entgast und dann in die auf 80 °C vorgewärmten Formen gegossen. Die Härtung erfolgt während 6 Stunden bei 80 °C und zusätzlich 10 Stunden bei 140 °C.

Die Prüfergebnisse sind in Tabelle 2 aufgelistet.

Tabelle 2

| Beschichtungs-mittel | Formbeständigkeit nach Martens °C | Biege-festigkeit $N/mm^2$ | Schlag-zähigkeit $kJ/m^2$ |
|---|---|---|---|
| unbehandelt | 108 | 67 | 6,7 |
| Zitronensäure | 108 | 75 | 7,9 |

Beispiel 3

Zu 1 000 g eines cycloaliphatischen Epoxidharzes (3,4-Epoxicyclohexylmethyl-(3,4-epoxi) cyclohexancarboxylat) werden 1 050 g aufgeschmolzenes Hexahydrophthalsäureanhydrid gegeben. Nach dem Aufheizen auf 180 °C werden 4 200 g eines mit Zitronensäure behandelten Dolomitmehles untergerührt.

Diese Mischung wird mit 120 g eines alkalischen Beschleunigers versetzt. Die Masse wird 20 min bei 80 °C auf 1 kPa entgast und dann in die auf 80 °C vorgewärmten Formen gegossen. Die Härtung erfolgt während 6 Stunden bei 80 °C und zusätzlich 10 Stunden bei 140 °C.

Die Prüfergebnisse stehen in Tabelle 3.

Tabelle 3

| Beschichtungs-mittel | Formbeständigkeit nach Martens °C | Biege-festigkeit $N/mm^2$ | Schlag-zähigkeit $kJ/m^2$ |
|---|---|---|---|
| unbehandelt | 166 | 70 | 5,6 |
| Zitronensäure | 165 | 81 | 6,5 |

**Patentansprüche**

1. Reaktionsharzmassen auf der Basis von anhydridgehärteten Epoxidharzen und carbonathaltigen Füllstoffen, gekennzeichnet durch ein Carbonat des Calcium und/oder Magnesium behandelt mit einer mehrbasischen anorganischen Säure oder einer mehrbasischen organischen Säure, die mit der Oberfläche des Carbonats reagiert und abbindet.
2. Reaktionsharzmassen nach Anspruch 1, dadurch gekennzeichnet, daß als Carbonat Dolomit eingesetzt ist.
3. Reaktionsharzmassen nach Anspruch 1, dadurch gekennzeichnet, daß als Carbonat ein Calcit eingesetzt ist.
4. Reaktionsmassen nach Anspruch 1-3, dadurch gekennzeichnet, daß das Carbonat mit Bernsteinsäure oder Fumarsäure behandelt ist.
5. Reaktionsharzmassen nach Anspruch 1 bis 3, dadurch gekennzeichnet, daß das Carbonat mit einer organischen Hydroxysäure behandelt ist.
6. Reaktionsharzmassen nach Anspruch 5, dadurch gekennzeichnet, daß das Carbonat mit Zitronen- oder Äpfelsäure behandelt ist.
7. Reaktionsharzmassen nach Anspruch 1 bis 3, dadurch gekennzeichnet, daß das Carbonat mit einer mehrbasischen Aminosäure behandelt ist.
8. Formstoffe hergestellt aus einem anhydridgehärteten Epoxidharz und einem Carbonat des Calcium und/oder Magnesium behandelt mit einer Verbindung gemäß Anspruch 1 bis 7.

**Claims**

1. Setting resin masses having a basis of anhydride-hardened epoxy resins and carbonate-containing fillers, characterised by a carbonate of calcium and/or magnesium which has been treated with a polybasic inorganic acid or a polybasic organic acid which reacts and bonds with the surface of the carbonate.
2. Setting resin masses as claimed in Claim 1, characterised in that dolomite is used as carbonate.

3. Setting resin masses as claimed in Claim 1, characterised in that calcite is used as carbonate.

4. Setting resin masses as claimed in Claims 1-3, characterised in that the carbonate is treated with succinic acid or fumaric acid.

5. Setting resin masses as claimed in Claims 1 to 3, characterised in that the carbonate is treated with an organic hydroxy acid.

6. Setting resin masses as claimed in Claim 5, characterised in that the carbonate is treated with citric acid or malic acid.

7. Setting resin masses as claimed in Claims 1 to 3, characterised in that the carbonate is treated with a polybasic amino acid.

8. Moulding compositions produced from an anhydride-hardened epoxy resin and a carbonate of calcium and/or magnesium which has been treated with a compound as claimed in Claims 4 to 7.

**Revendications**

1. Masse de résine durcissable à base de résine époxydique durcie par un anhydride et de charges contenant un carbonate, caractérisée par un carbonate de calcium et/ou de magnésium traité par un polyacide minéral, ou par un polyacide organique qui réagit avec la surface du carbonate en donnant une adhérence.

2. Masse de résine durcissable suivant la revendication 1, caractérisée en ce que de la dolomite est utilisée comme carbonate.

3. Masse de résine durcissable suivant la revendication 1, caractérisée en ce que de la calcite est utilisée comme carbonate.

4. Masse durcissable suivant les revendications 1 à 3, caractérisée en ce que le carbonate est traité par de l'acide succinique ou par de l'acide fumarique.

5. Masse de résine durcissable suivant les revendications 1 à 3, caractérisée en ce que le carbonate est traité par un hydroxyacide organique.

6. Masse de résine durcissable suivant la revendication 5, caractérisée en ce que le carbonate est traité par de l'acide citrique ou par de l'acide malique.

7. Masse de résine durcissable suivant les revendications 1 à 3, caractérisée en ce que le carbonate est traité par un polyaminoacide.

8. Matière moulée, préparée à partir d'une résine époxydique durcie par un anhydride et d'un carbonate de calcium et/ou de magnésium traité par un composé suivant les revendications précédentes.